# EUROPÄISCHE PATENTSCHRIFT

(11) **EP 2 910 790 B1**
(45) Veröffentlichungstag und Bekanntmachung des Hinweises auf die Patenterteilung: **05.06.2019**
(21) Anmeldenummer: 15152061.6
(22) Anmeldetag: 22.01.2015
(51) Int. Cl.: F04D 19/04, F04D 29/063, F16C 33/66, F16N 31/00, F16N 7/40

(54) **Vacuum pump bearing lubrication allowing different pump orientations**
Vakuumpumpe-Lagerschmierung, die unterschiedliche Pumporientierungen zuläßt
Lubrification de palier de pompe à vide autorisant différentes orientations de la pompe

(30) Priorität: 21.02.2014 DE 102014102272
(43) Veröffentlichungstag der Anmeldung: 26.08.2015
(73) Patentinhaber: PFEIFFER VACUUM GMBH, 35614 Asslar (DE)
(72) Erfinder: Sönke, Gilbrich, 35753 Greifenstein (DE)
(74) Vertreter: Manitz Finsterwald Patent- und Rechtsanwaltspartnerschaft mbB

(56) Entgegenhaltungen:
- EP-A2- 2 060 794
- EP-A2- 2 390 510
- DE-A1- 2 555 902
- DE-A1- 3 335 892
- DE-A1- 10 321 326

## Beschreibung

Die vorliegende Erfindung betrifft eine Vakuumpumpe, hiernach als "Pumpe" bezeichnet, mit einer um eine Rotationsachse drehbaren Rotorwelle, und mit einer Förderpumpe zur Förderung eines Betriebsmittels, insbesondere eines Schmiermittels, um ein Drehlager, das zur drehbaren Unterstützung der Rotorwelle dient, mit dem Betriebsmittel zu versorgen.

Eine derartige Pumpe wird zum Auspumpen bzw. Evakuieren eines Rezipienten eingesetzt. Die Pumpe weist dazu einen Flansch auf, über den sie an den Rezipienten angeschlossen wird. Bei aus dem Stand der Technik bekannten Pumpen ist zu beachten, dass diese nicht in jeder Lage an den Rezipienten angeschlossen und in Betrieb genommen werden können. Es sind zum Beispiel Pumpen bekannt, die nur mit einem im Wesentlichen nach oben ausgerichteten Flansch betrieben werden können. Werden diese Pumpen mit nach unten weisendem Flansch, also gewissermaßen über Kopf, an einen Rezipienten angeschlossen und in Betrieb genommen, so kann das Betriebsmittel nicht zwischen der Förderpumpe und dem Drehlager zirkulieren, da das von der Schwerkraft vom Drehlager zur Förderpumpe zurückgeförderte Betriebsmittel bei auf dem Kopf stehender Pumpe nicht zurück zur Förderpumpe strömen kann. Dadurch könnte die Pumpe bei einem Betrieb über Kopf beschädigt werden.

Andere Pumpen müssen dagegen mit nach unten gerichtetem Flansch, also auf dem Kopf stehend, an einen Rezipienten angeschlossen werden, da das Betriebsmittel nur in dieser Lage von der Schwerkraft vom Drehlager zur Förderpumpe zurückgefördert werden kann.

Bei aus dem Stand der Technik bekannten Pumpen muss somit deren Raumlage bzw. Ausrichtung beachtet werden, in der sie an einem Rezipienten angeordnet und in Betrieb genommen werden können. Eine Pumpe, bei der die Lage bzw. Ausrichtung unbeachtet bleiben kann, wäre daher wünschenswert.

Die DE 103 21 326 A1 offenbart eine Pumpe gemäß dem Oberbegriff des Anspruchs 1.

Der vorliegenden Erfindung liegt somit die Aufgabe zugrunde, eine flexibler einsetzbare Pumpe bereitzustellen, die in jeder oder zumindest nahezu jeder Raumlage relativ zu einem Rezipienten angeordnet und in Betreib genommen werden kann. Insbesondere soll eine Pumpe bereitgestellt werden, die ohne Umbau sowohl aufrecht ausgerichtet als auch über Kopf an einen Rezipienten angeschlossen und in Betrieb genommen werden kann.

Die Aufgabe wird durch eine Pumpe mit den Merkmalen des Anspruchs 1 gelöst. Bevorzugte Ausführungsformen und Weiterbildungen der Erfindung sind in den abhängigen Ansprüchen beschrieben.

Die erfindungsgemäße Pumpe umfasst eine um eine Rotationsachse drehbare Rotorwelle, eine Förderpumpe zur Förderung eines Betriebsmittels, insbesondere eines Schmiermittels, um ein Drehlager, das zur drehbaren Unterstützung der Rotorwelle dient, mit dem Betriebsmittel zu versorgen, und wenigstens einen ersten Rücklauf und einen zweiten Rücklauf für das Betriebsmittel, wobei die Pumpe in jeder Raumlage, bei der die Rotationsachse einen Winkel zur Vertikalen im Bereich von einschließlich 0 Grad bis einschließlich 180 Grad einschließt, an einen Rezipienten anschließbar ist, und wobei die Förderpumpe und die beiden Rückläufe derart an der Pumpe angeordnet sind, dass in jeder Raumlage das Betriebsmittel über wenigstens einen der beiden Rückläufe vom Drehlager zur Förderpumpe zurückführbar ist.

Die Pumpe kann somit in jeder Raumlage an einen Rezipienten angeschlossen und in Betrieb genommen werden, da in jeder Raumlage über wenigstens einen Rücklauf die insbesondere schwerkraftgestützte Rückführung des Betriebsmittels vom Drehlager zur Förderpumpe sichergestellt ist. Die Pumpe ist somit gewissermaßen alllagenfähig. Sie kann daher in jeder Raumlage bestimmungsgemäß in Gebrauch genommen werden. Insbesondere kann sie sowohl aufrecht stehend als auch über Kopf eingesetzt werden.

Bei aus dem Stand der Technik bekannten Vakuumpumpen kann es erforderlich sein, dass die Ausrichtung der Förderpumpe relativ zur Vakuumpumpe geändert werden muss, wenn die für den aufrecht ausgerichteten Betrieb eingerichtete Vakuumpumpe über Kopf in Betrieb genommen werden soll. D.h. bei aus dem Stand der Technik bekannten Vakuumpumpen muss die Förderpumpe umgebaut werden. Die erfindungsgemäße Pumpe weist dagegen den Vorteil auf, dass diese in allen Raumlagen bestimmungsgemäß in Betrieb genommen werden kann, ohne dass die die Förderpumpe umgebaut werden muss.

Erfindungsgemäß weist die Förderpumpe wenigstens einen um eine Drehachse drehbaren Förderer, insbesondere einen Förderrotor, auf und ist derart relativ zur Rotorwelle angeordnet, dass die Drehachse senkrecht zur Rotationsachse verläuft. Bei einer derartigen Anordnung der Förderpumpe relativ zur Rotorwelle kann auf einfache Weise über die Förderpumpe die Versorgung des Drehlagers mit dem Betriebsmittel sichergestellt werden.

Vorzugsweise ist die Förderpumpe seitlich neben der Rotorwelle angeordnet. Dadurch kann auf einfache Weise erreicht werden, dass bei einer Raumlage von 90 Grad, bei der sich die Förderpumpe an der Unterseite der Pumpe befindet, das Betriebsmittel aufgrund der Schwerkraft durch wenigstens einen Rücklauf zur Förderpumpe zurückströmt.

Das Betriebsmittel kann bei einer Raumlage der Pumpe von 0 Grad bis 90 Grad über den ersten Rücklauf und bei einer Raumlage der Pumpe von 90 Grad bis 180 Grad über den zweiten Rücklauf vom Drehlager zur Förderpumpe zurückführbar sein. Somit kann das Betriebsmittel in allen möglichen Raumlagen durch den ersten oder zweiten Rücklauf zur Förderpumpe zurückströmen.

Besonders vorteilhaft ist es, wenn - bezogen auf die Raumlage der Pumpe von 0 Grad - der erste Rücklauf einen ersten Rücklaufkanal aufweist, der vom Drehlager weg nach radial außen und nach unten zu einem ersten Reservoir geführt ist, und der zweite Rücklauf einen zweiten Rücklaufkanal aufweist, der vom Drehlager weg nach radial außen und nach oben zu einem zweiten Reservoir geführt ist. Bei aufrecht angeordneter Pumpe kann das Betriebsmittel somit aufgrund der Wirkung der Schwerkraft durch den nach unten geneigten ersten Rücklaufkanal vom Drehlager weg zum ersten Reservoir strömen. Entsprechend kann bei auf dem Kopf stehender Pumpe das Betriebsmittel durch den dann nach unten geneigten zweiten Rücklaufkanal zum zweiten Reservoir strömen.

Bei einer bevorzugten Ausgestaltung der Erfindung weist die Förderpumpe einen Arbeitsraum mit wenigstens einem ersten Einlass und einem zweiten Einlass auf und die Förderpumpe ist über den ersten Einlass mit dem ersten Rücklauf, insbesondere mit einem ersten Reservoir des ersten Rücklaufs, und über den zweiten Einlass mit dem zweiten Rücklauf, insbesondere einem zweiten Reservoir des zweiten Rücklaufs, verbunden. Das Betriebsmittel kann somit vom jeweiligen Reservoir in die Förderpumpe gelangen, über die das Betriebsmittel erneut dem Drehlager zugeführt werden kann. Die Förderpumpe ist dabei derart ausgestaltet, dass das über den jeweiligen Rücklauf zurückströmende Betriebsmittel von der Förderpumpe aufgenommen und in einen Vorlauf gefördert werden kann, über den das Betriebsmittel dem Drehlager zugeführt werden kann.

Die beiden Einlässe können in Drehrichtung eines Förderers der Förderpumpe gesehen um zumindest annähernd 180 Grad versetzt zueinander angeordnet sein. Dadurch kann sowohl bei aufrecht ausgerichteter Pumpe als auch bei auf dem Kopf stehender Pumpe das Betriebsmittel über jeweils einen der beiden Einlässe in die Förderpumpe gelangen.

Vorzugsweise liegt bei einer Raumlage der Pumpe von 0 Grad der erste Einlass in einem unteren Bereich der Förderpumpe und der zweite Einlass liegt in einem oberen Bereich der Förderpumpe. Das Betriebsmittel kann somit bei der Raumlage von 0 Grad vom ersten Reservoir über den ersten Einlass und bei umgedrehter Pumpe, also bei einer Raumlage von 180 Grad, über den zweiten Einlass vom zweiten Reservoir in die Förderpumpe gelangen.

Die Förderpumpe kann dazu ausgebildet sein, über den ersten Rücklauf zurückgeführtes Betriebsmittel oder über den zweiten Rücklauf zurückgeführtes Betriebsmittel in wenigstens einen Vorlauf für das Betriebsmittel zu fördern. Das Betriebsmittel kann somit über den Vorlauf dem Drehlager zugeführt werden.

Nach einer bevorzugten Ausgestaltung der Erfindung ist die Förderpumpe dazu ausgebildet, bei einer Raumlage der Pumpe von 0 bis 90 Grad über den ersten Rücklauf zurückgeführtes Betriebsmittel in einen ersten Vorlauf und bei einer Raumlage der Pumpe von 90 Grad bis 180 Grad über den zweiten Rücklauf zurückgeführtes Betriebsmittel in einen zweiten Vorlauf zu fördern. Dadurch kann bei jeder Raumlage eine sichere Versorgung des Drehlagers mit dem Betriebsmittel erreicht werden.

Die Förderpumpe kann einen Arbeitsraum mit wenigstens einem Auslass aufweisen, über den die Förderpumpe mit dem wenigstens einen Vorlauf verbunden ist. Das Betriebsmittel kann somit über den Auslass vom Arbeitsraum in den Vorlauf und damit zum Drehlager gepumpt werden.

Besonders vorteilhaft ist es, wenn der Auslass in Drehrichtung des Förderers der Förderpumpe gesehen um zumindest annähernd 90 Grad gegenüber einem der Einlässe versetzt ist. Die Förderpumpe kann dadurch konstruktiv einfach ausgebildet werden, zum Beispiel nach Art einer Drehschieberpumpe, die das über einen jeweiligen Einlass vom Drehlager zurückgeführte Betriebsmittel aufnimmt und um 90 Grad zu einem jeweiligen Auslass fördert, über den das Betriebsmittel in einen Vorlauf gelangt und somit erneut dem Drehlager zugeführt wird.

Die Förderpumpe kann über einen ersten Auslass mit dem ersten Vorlauf und über einen zweiten Auslass mit dem zweiten Vorlauf verbunden sein. Das über den ersten Rücklauf zurückkommende Betriebsmittel kann somit in den ersten Vorlauf und das über den zweiten Rücklauf zurückkommende Betriebsmittel kann somit von der Förderpumpe in den zweiten Vorlauf gepumpt werden.

Besonders bevorzugt sind an der Förderpumpe die beiden Auslässe - in Drehrichtung des Förderers der Förderpumpe gesehen - um jeweils 90 Grad versetzt zu den jeweiligen Einlässen vorgesehen. Die Förderpumpe kann dadurch konstruktiv einfach aufgebaut werden, zum Beispiel nach Art einer Drehschieberpumpe.

Die beiden Vorläufe können in einen gemeinsamen Vorlauf münden. Das Betriebsmittel kann somit über den gemeinsamen Vorlauf dem Drehlager zugeführt werden.

Wenigstens eine Rücklaufverhinderungseinrichtung kann im Mündungsbereich der beiden Vorläufe vorgesehen sein, die verhindert, dass über den ersten Vorlauf zugeführtes Betriebsmittel in den zweiten Vorlauf gelangt und, umgekehrt, dass über den zweiten Vorlauf zugeführtes Betriebsmittel in den ersten Vorlauf gelangt. Das Betriebsmittel, welches über den ersten Vorlauf in Richtung des Drehlagers gefördert wird, kann somit nicht in den zweiten Vorlauf gelangen. Entsprechend verhindert die Rücklaufverhinderungseinrichtung, dass über den zweiten Vorlauf in Richtung des Drehlagers gefördertes Betriebsmittel in den ersten Vorlauf gelangt. Bei der Rücklaufverhinderungseinrichtung kann es sich beispielsweise um ein Rückschlagelement oder ein Absperrelement, wie etwa ein Ventil, handeln. Die Rücklaufverhinderungseinrichtung kann somit einfach und kostengünstig realisiert werden.

Bei einer bevorzugten Weiterbildung der Erfindung ist wenigstens ein Rücklauf zur Förderpumpe hin verschließbar, insbesondere mittels wenigstens eines manuell betätigbaren oder schwerkraft-, druck- oder elektrisch betätigbaren Absperrelements. Wenn der Rücklauf nicht benötigt wird, kann dieser somit geschlossen werden.

Die Förderpumpe kann eine Drehschieberpumpe, eine Scrollpumpe, eine Siegbahnpumpe oder eine Membranpumpe, insbesondere eine Doppelmembranpumpe, sein.

Bevorzugt handelt es sich bei der Pumpe um eine Turbomolekularpumpe.

Die Erfindung wird im Folgenden beispielhaft unter Bezugnahme auf die Zeichnungen beschrieben. Es zeigen, jeweils schematisch,
- Fig. 1: eine geschnittene Ansicht einer Vakuumpumpe,
- Fig. 2: eine seitliche Außenansicht einer erfindungsgemäßen Vakuumpumpe,
- Fig. 3: eine geschnittene Teilansicht der Vakuumpumpe von Fig. 2,
- Fig. 4: eine geschnittene Ansicht einer bevorzugten Variante einer Förderpumpe für die Vakuumpumpe der Fig. 3,
- Fig. 5: eine geschnittene Ansicht eines Mündungsbereichs zweier Vorlaufkanäle, die in einen gemeinsamen Vorlauf der Pumpe von Fig. 3 münden, und
- Fig. 6: eine geschnittene Ansicht einer weiteren bevorzugten Variante einer Förderpumpe für die Pumpe der Fig. 3.

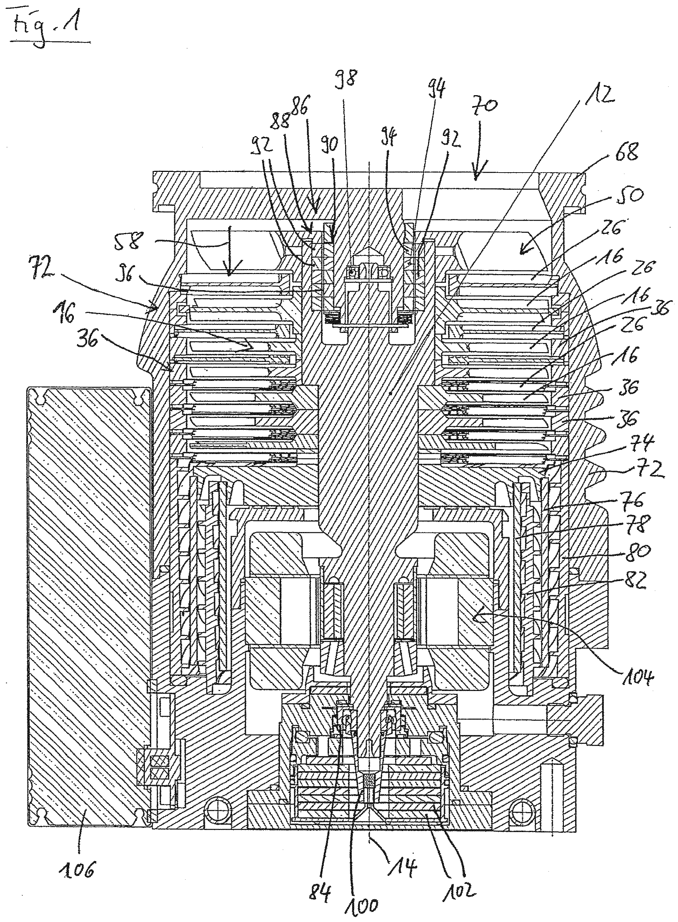

Die in Fig. 1 gezeigte Vakuumpumpe umfasst einen von einem Einlassflansch 68 umgebenen Pumpeneinlass 70 sowie mehrere Pumpstufen zur Förderung des an dem Pumpeneinlass 70 anstehenden Gases zu einem in Fig. 1 nicht dargestellten Pumpenauslass. Die Vakuumpumpe umfasst einen Stator mit einem statischen Gehäuse 72 und einen in dem Gehäuse 72 angeordneten Rotor mit einer um eine Rotationsachse 14 drehbar gelagerten Rotorwelle 12.

Die Vakuumpumpe ist als Turbomolekularpumpe ausgebildet und umfasst mehrere pumpwirksam miteinander in Serie geschaltete turbomolekulare Pumpstufen mit mehreren mit der Rotorwelle 12 verbundenen turbomolekularen Rotorscheiben 16 und mehreren in axialer Richtung zwischen den Rotorscheiben 16 angeordneten und in dem Gehäuse 72 festgelegten turbomolekularen Statorscheiben 26, die durch Distanzringe 36 in einem gewünschten axialen Abstand zueinander gehalten sind. Die Rotorscheiben 16 und Statorscheiben 26 stellen in dem Schöpfbereich 50 eine in Richtung des Pfeils 58 gerichtete axiale Pumpwirkung bereit.

Die Vakuumpumpe umfasst außerdem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 12 verbundene Rotornabe 74 und zwei an der Rotornabe 74 befestigte und von dieser getragene zylindermantelförmige Holweck-Rotorhülsen 76, 78, die koaxial zu der Rotationsachse 14 orientiert und in radialer Richtung ineinander geschachtelt sind. Ferner sind zwei zylindermantelförmige Holweck-Statorhülsen 80, 82 vorgesehen, die ebenfalls koaxial zu der Rotationsachse 14 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 76, 78 und einer Holweck-Statorhülse 80, 82 gebildet. Dabei ist jeweils eine der pumpaktiven Oberflächen glatt ausgebildet - vorliegend diejenige der Holweck-Rotorhülse 76 bzw. 78 - und die gegenüberliegende pumpaktive Oberfläche der Holweck-Statorhülse 80, 82 weist eine Strukturierung mit schraubenlinienförmig um die Rotationsachse 14 herum in axialer Richtung verlaufenden Nuten auf, in denen durch die Rotation des Rotors das Gas vorangetrieben und dadurch gepumpt wird.

Die Vakuumpumpe umfasst einen Antriebsmotor 104 zum drehenden Antreiben des Rotors, dessen Läufer durch die Rotorwelle 12 gebildet ist. Eine Steuereinheit 106 steuert den Motor 104 an.

Die drehbare Lagerung der Rotorwelle 12 wird durch ein als Wälzlager ausgebildetes Drehlager 84 im Bereich des Pumpenauslasses und ein Permanentmagnetlager 86 im Bereich des Pumpeneinlasses 70 bewirkt.

Das Permanentmagnetlager 86 umfasst eine rotorseitige Lagerhälfte 88 und eine statorseitige Lagerhälfte 90, welche jeweils einen Ringstapel aus mehreren in axialer Richtung aufeinandergestapelten permanentmagnetischen Ringen 92, 94 umfassen, wobei sich die Magnetringe 92, 94 unter Ausbildung eines radialen Lagerspalts 96 gegenüberliegen.

Innerhalb des Magnetlagers 86 ist ein Not- bzw. Fanglager 98 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Das Drehlager 84 wird mit einem Betriebsmittel, wie etwa einem Schmiermittel, versorgt. Dabei kann, wie Fig. 1 zeigt, im Bereich des Drehlagers 84 an der Rotorwelle 12 eine konische Spritzmutter 100 mit einem zu dem Drehlagers 84 hin zunehmenden Außendurchmesser vorgesehen sein, die mit zumindest einem Abstreifer eines mehrere mit einem Betriebsmittel, wie zum Beispiel einem Schmiermittel, getränkte saugfähige Scheiben 102 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 100 übertragen und infolge der Zentrifugalkraft entlang der Spritzmutter 100 in Richtung des größer werdenden Außendurchmessers der Spritzmutter 100 zu dem Drehlager 84 hin gefördert, wo es zum Beispiel eine schmierende Funktion erfüllt.

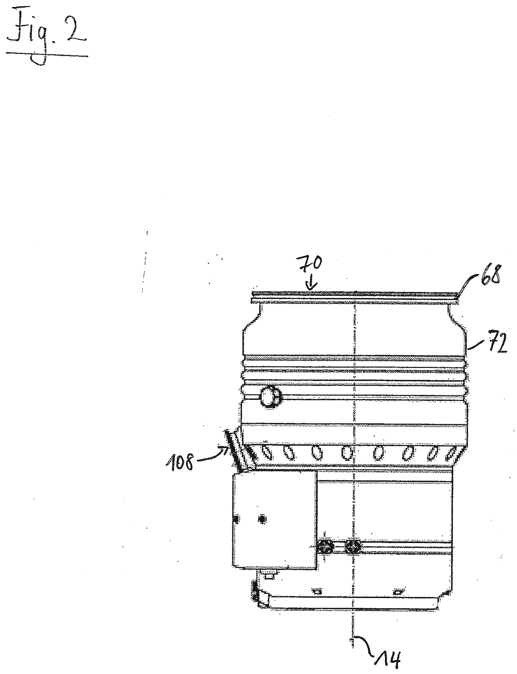

Bei der in Fig. 2 gezeigten Darstellung ist - wie in Fig. 1 - der Einlassflansch 68 der Pumpe nach oben gerichtet und die Rotationsachse 14 der in Fig. 2 nicht gezeigten Rotorwelle 12 ist in einem Winkel von 0 Grad zur Vertikalen angeordnet. Bei dieser Raumlage ist die Pumpe aufrecht ausgerichtet. Wird die Pumpe dagegen auf den Kopf gestellt, so weist der Einlassflansch 68 nach unten. Die Rotationsachse 14 befindet sich dann in einem Winkel zur Vertikalen von 180 Grad.

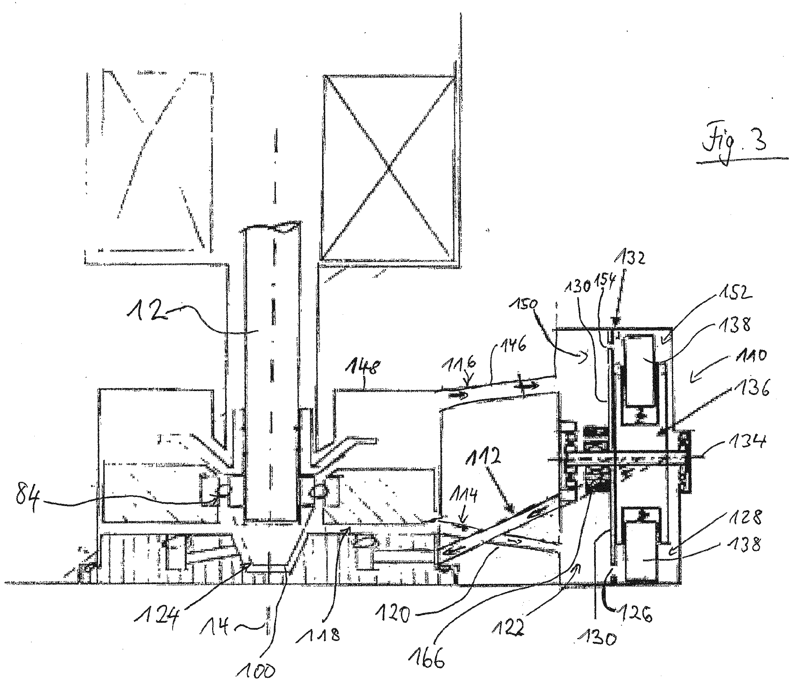

Der Aufbau der Pumpe der Fig. 2 entspricht dem Aufbau der Pumpe von Fig. 1. Allerdings wird bei der Pumpe der Fig. 2 das Drehlager 84 über eine seitlich neben der Rotorwelle 12 angeordnete Förderpumpe 110 mit Betriebsmittel versorgt, wie mit Bezug auf die Fig. 3 näher ausgeführt wird.

Die Förderpumpe 110 ist dazu ausgebildet, das Betriebsmittel in wenigstens einen Vorlauf 112 zu fördern, über den das Betriebsmittel dem Drehlager 84 zugeführt wird. Zur Rückführung des Betriebsmittels vom Drehlager 84 zur Förderpumpe sind ein erster Rücklauf 114 sowie ein zweiter Rücklauf 116 vorgesehen.

Der erste Rücklauf 114 weist seitlich unterhalb des Drehlagers 84 einen Spalt 118 auf, der an seinem radial äußeren Ende in einen ersten Rücklaufkanal 120 mündet, der nach radial außen und nach unten weg zu einem ersten Reservoir 122 geführt ist.

Das über den Vorlauf 112 zugeführte Betriebsmittel gelangt in den trichterförmigen Speicher 124 unterhalb der Spritzmutter 100, die wie vorstehend mit Bezug auf Fig. 1 beschrieben wurde, das Betriebsmittel zu dem Wälzlager 84 hin fördert, wo es zum Beispiel eine schmierende Funktion erfüllt. Vom Wälzlager 84 tropft das Betriebsmittel ab und gelangt im Wesentlichen aufgrund der Wirkung der Schwerkraft über den Spalt 118 und den ersten Rücklaufkanal 120 in das erste Reservoir 122.

Bei der Darstellung der Fig. 3 ist die Pumpe wie bei den Darstellungen der Fig. 1 und 2 aufrecht ausgerichtet. Der in Fig. 3 nicht gezeigte Flansch 68 befindet sich folglich an der Oberseite der Pumpe und die Rotationsachse 14 der Rotorwelle 12 weist einen Winkel zur Vertikalen von 0° auf. Eine derartige Ausrichtung der Pumpe wird nachfolgend auch als Raumlage von 0° bezeichnet.

Wie Fig. 3 zeigt, weist die Förderpumpe 110 einen ersten Einlass 126 auf, über den das Betriebsmittel vom ersten Reservoir 122 in einen ersten Arbeitsraum 128 der Förderpumpe gelangen kann. Der erste Einlass 126 ist dabei in einer Trennwand 130 ausgebildet, die das erste Reservoir 122 vom ersten Arbeitsraum 128 abtrennt. Außerdem befindet sich der erste Einlass 126 bei der Raumlage von 0° an der im Wesentlichen tiefsten Stelle in der Trennwand 130, so dass das Betriebsmittel auch bei einem geringen Pegel im ersten Reservoir 122 in den ersten Arbeitsraum 128 gelangen kann.

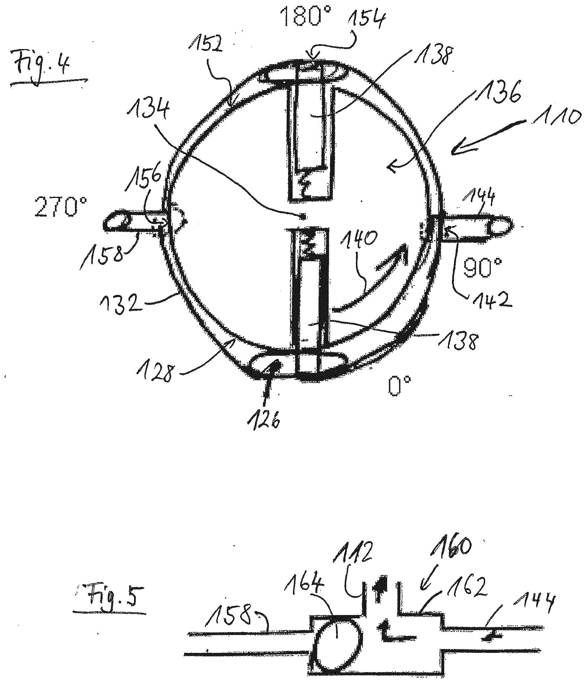

Die Förderpumpe 110 wird mit Bezug auf die Fig. 4 näher beschrieben. Die Förderpumpe 110 ist in Art einer Drehschieberpumpe ausgebildet und weist einen in einem Gehäuse 132 um eine Drehachse 134 drehbaren Rotor auf, der nachfolgend als Förderrotor 136 bezeichnet wird. Im Förderrotor 136 sind über Flieh- und Federkraft radial bewegbare Schieber 138 angeordnet. Im Inneren des Gehäuses 132 befindet sich der erste Arbeitsraum 128, der durch das Gehäuse 132, den Förderrotor 136 und den jeweiligen sich in Drehrichtung 140 des Förderrotors mitbewegenden Schieber 138 räumlich begrenzt wird.

Dreht sich der Förderrotor 136 in der Förderrichtung 140, so wird das über den ersten Einlass 126 in den ersten Arbeitsraum 128 gelangte Betriebsmittel vom Förderrotor über einen bei 90° liegenden ersten Auslass 142 in einen ersten Vorlaufkanal 144 gefördert, der in den Vorlauf 112 mündet (vgl. Fig. 5).

Bei der aufrechten Ausrichtung der Förderpumpe ist der zweite Rücklauf 116 funktionslos. Wird die Pumpe dagegen auf den Kopf gestellt, so dass der Flansch 68 (vgl. Fig. 2) unten liegt und die Rotationsachse 14 einen Winkel von 180° mit der Vertikalen einschließt, dann wird der erste Rücklauf 114 funktionslos und das Betriebsmittel gelangt über den zweiten Rücklauf 116 zurück zur Förderpumpe 110, wie nachfolgend beschrieben wird.

Der zweite Rücklauf 116 weist einen zweiten Rücklaufkanal 146 auf, der bezogen auf die Raumlage der Pumpe von 0° entsprechend der Fig. 3 von einem radial neben und oberhalb des Drehlagers 84 liegenden Sammelbereich 148 für das Betriebsmittel weg nach radial außen und nach oben zu einem zweiten Reservoir 150 geführt ist, das wiederum über die Trennwand 130 von einem weiteren, zweiten Arbeitsraum 152 der Förderpumpe 110 getrennt ist.

In der Trennwand 130 ist ein zweiter Einlass 154 vorgesehen, über den das Betriebsmittel vom zweiten Reservoir 150 in den zweiten Arbeitsraum 152 gelangen kann. Der zweite Einlass 154 befindet sich bei auf dem Kopf stehender Pumpe, also bei einer Raumlage der Pumpe von 180°, im unteren Bereich der Pumpe. Das Betriebsmittel kann daher auch bei einem geringen Pegel im zweiten Reservoir 150 in den zweiten Arbeitsraum 152 gelangen.

Wie aus der Fig. 4 ersichtlich ist, wird das in den zweiten Arbeitsraum 152 gelangte Betriebsmittel von dem jeweiligen Schieber 138 bei sich in Drehrichtung 140 drehendem Förderrotor 136 zu einem bei 270° angeordneten zweiten Auslass 156 gefördert. Der zweite Auslass 156 mündet in einen zweiten Vorlaufkanal 158, der wiederum wie der erste Vorlaufkanal 144 in den Vorlauf 112 mündet.

Wie Fig. 5 zeigt, ist im Mündungsbereich des ersten und zweiten Vorlaufkanals 144, 158 eine Rücklaufverhinderungseinrichtung 160 angeordnet, die dazu ausgebildet ist, zu verhindern, dass über den ersten Vorlaufkanal 144 in den gemeinsamen Vorlauf 112 strömendes Betriebsmittel in den zweiten Vorlaufkanal 158 und, umgekehrt, über den zweiten Vorlaufkanal 158 zugeführtes Betriebsmittel in den ersten Vorlaufkanal 144 gelangt. Die Rücklaufverhinderungseinrichtung 160 stellt somit gewissermaßen sicher, dass kein Kurzschluss zwischen den beiden Vorlaufkanälen 144, 158 auftritt.

Die Rücklaufverhinderungseinrichtung 160 ist in funktioneller Hinsicht in Art eines pneumatischen Oder-Ventils ausgebildet. Die Rücklaufverhinderungseinrichtung 160 bildet im Mündungsbereich der beiden Vorlaufkanäle 144 und 158 einen vergrößerten Raumbereich 162, in welchem eine Kugel 164 angeordnet ist, die in Abhängigkeit von der Betriebsmittelströmung einen der beiden Vorlaufkanäle 144, 158 verschließen kann. Wie beispielhaft in Fig. 5 gezeigt ist, wird die Kugel 164 von einer vom ersten Vorlaufkanal 144 kommenden Betriebsmittelströmung gegen die Mündung des zweiten Vorlaufkanals 158 gedrückt und verschließt diesen dadurch.

Die Rücklaufverhinderungseinrichtung 160 kann in Art eines Rückschlagelements oder eines Absperrelements, wie etwa ein Absperrventil, ausgebildet sein. Die Rücklaufverhinderungseinrichtung 160 kann auch als ein manuell, schwerkraft-, druck- oder elektrisch getriebenes Element, welches je nach Vakuumpumpenlage den ersten oder zweiten Vorlaufkanal 144, 158 mit einem Schieber oder einer Klappe verschließt (nicht gezeigt), ausgebildet sein.

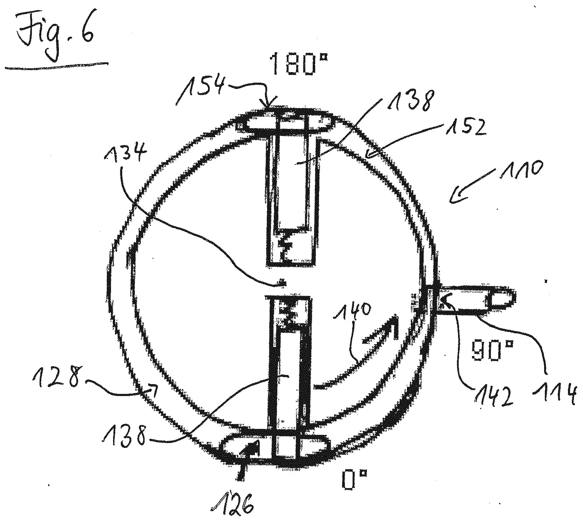

Die in Fig. 6 gezeigte Variante der Förderpumpe 110 weist gegenüber der Variante der Fig. 4 nur den bei 90° liegenden ersten Auslass 142 mit den von dem ersten Auslass 142 weggeführten ersten Vorlaufkanal 144 auf, der in den Vorlauf 112 mündet. Der bei der Variante der Fig. 4 vorhandene zweite Auslass 156 bei 270° mit dem sich daran anschließenden zweiten Vorlaufkanal 158 ist dagegen nicht mehr vorhanden.

Das über den ersten Einlass 126 in die Förderpumpe 110 gelangte Betriebsmittel wird, wie vorstehend beschrieben wurde, in den ersten Vorlaufkanal 144 gefördert. Das über den zweiten Einlass 154 in die Förderpumpe 110 gelangte Betriebsmittel wird bei auf dem Kopf stehender Pumpe um eine dreiviertel Umdrehung in Drehrichtung 140 ebenfalls bis zu dem ersten Auslass 142 und dem sich daran anschließenden ersten Vorlaufkanal 144 bei 90° gefördert. Dazu kann der ungenutzte Einlass 126 mit einem nicht gezeigten manuell betätigbaren oder schwerkraft-, druck- oder elektrisch betätigbaren Absperrelement verschlossen werden, um zu verhindern, dass das Betriebsmittel aus dem Einlass 126 herausgedrückt wird.

Entsprechend den vorstehenden Ausführungen kann bei der mit Bezug auf die Fig. 2 bis 6 beschriebenen Pumpe bei einer Raumlage der Pumpe von 0°, also bei einer aufrecht ausgerichteten Pumpe wie in Fig. 2, das Betriebsmittel über den ersten Rücklauf 114 zur Förderpumpe 110 gelangen. Dagegen kann bei auf dem Kopf stehender Pumpe, also bei einer Raumlage der Pumpe, bei der die Rotationsachse 14 einen Winkel zur Vertikalen von 180° einschließt, das Betriebsmittel über den zweiten Rücklauf 116 vom Drehlager 84 zur Förderpumpe 110 gelangen.

Wie leicht einzusehen ist, kann das Betriebsmittel in jeder dazwischenliegenden Raumlage, bei der die Rotationsachse 14 einen Winkel zur Vertikalen im Bereich zwischen 0° und 180° einschließt, über wenigstens einen der beiden Rückläufe 114, 116 ebenfalls vom Drehlager 84 zur Förderpumpe 110 gelangen. Insbesondere kann das Betriebsmittel bei einer Raumlage der Pumpe von 0 bis 90 Grad über den ersten Rücklauf 114 und bei einer Raumlage von 90 Grad bis 180 Grad über den zweiten Rücklauf 116 zur Förderpumpe 110 zurückströmen. Bei einer Raumlage von 90 Grad, also bei einem seitlich liegenden Flansch 68 und einer im unteren Bereich der Pumpe liegenden Förderpumpe 110, kann das Betriebsmittel über beide oder über einen der Rückläufe 114, 116 zur Förderpumpe 110 gelangen. Die erfindungsgemäße Pumpe kann somit aufrecht angeordnet, also mit nach oben weisendem Flansch 68, an einen Rezipienten angeschlossen und bestimmungsgemäß in Betrieb genommen werden oder auf dem Kopf stehend, also mit nach unten weisendem Flansch 68, oder in jeder Zwischenlage.

Die in den Fig. 4 und 6 gezeigten Varianten einer Förderpumpe 110 sind in Form einer Drehschieberpumpe ausgebildet. Die Förderpumpe 110 kann aber auch in Art einer Scrollpumpe, einer Siegbahnpumpe oder einer Membranpumpe ausgestaltet sein.

### Bezugszeichenliste

- 12: Rotorwelle
- 14: Rotationsachse
- 16: Rotorscheibe
- 26: Statorscheibe
- 36: Distanzring
- 50: Schöpfbereich
- 58: Pfeil
- 68: Einlassflansch
- 70: Pumpeneinlass
- 72: Gehäuse
- 74: Rotornabe
- 76, 78: Holweck-Rotorhülse
- 80, 82: Holweck-Statorhülse
- 84: Drehlager
- 86: Permanentmagnetlager
- 88: rotorseitige Lagerhälfte
- 90: statorseitige Lagerhälfte
- 92, 94: permanentmagnetischer Ring
- 96: radialer Lagerspalt
- 98: Fanglager
- 100: Spritzmutter
- 102: saugfähige Scheibe
- 104: Antriebsmotor
- 106: Steuereinheit
- 108: Pumpenauslass
- 110: Förderpumpe
- 112: Vorlauf
- 114: erster Rücklauf
- 116: zweiter Rücklauf
- 118: Spalt
- 120: erster Rücklaufkanal
- 122: erstes Reservoir
- 124: Speicher
- 126: erster Einlass
- 128: erster Arbeitsraum
- 130: Trennwand
- 132: Gehäuse
- 134: Drehachse
- 136: Förderrotor
- 138: Schieber
- 140: Drehrichtung
- 142: erster Auslass
- 144: erster Vorlaufkanal
- 146: zweiter Rücklaufkanal
- 148: Sammelbereich
- 150: zweites Reservoir
- 152: zweiter Arbeitsraum
- 154: zweiter Einlass
- 156: zweiter Auslass
- 158: zweiter Vorlaufkanal
- 160: Rücklaufverhinderungseinrichtung
- 162: Raumbereich
- 164: Kugel
- 166: Antriebsmotor

## Patentansprüche

1. Vakuumpumpe, hiernach als "Pumpe" bezeichnet, mit einer um eine Rotationsachse (14) drehbaren Rotorwelle (12),
einer Förderpumpe (110) zur Förderung eines Betriebsmittels, insbesondere eines Schmiermittels, um ein Drehlager (84), das zur drehbaren Unterstützung der Rotorwelle (12) dient, mit dem Betriebsmittel zu versorgen, und
wenigstens einem ersten Rücklauf (114) und einem zweiten Rücklauf (116) für das Betriebsmittel,
wobei die Pumpe in jeder Raumlage, bei der die Rotationsachse (14) einen Winkel zur Vertikalen im Bereich von einschließlich 0 Grad bis einschließlich 180 Grad einschließt, an einen Rezipienten anschließbar ist, und
wobei die Förderpumpe (110) und die beiden Rückläufe (114, 116) derart an der Pumpe angeordnet sind, dass in jeder Raumlage das Betriebsmittel über wenigstens einen der beiden Rückläufe (114, 116) vom Drehlager (84) zur Förderpumpe (110) zurückführbar ist, wobei die Förderpumpe (110) wenigstens einen um eine Drehachse (134) drehbaren Förderer aufweist
**dadurch gekennzeichnet, dass**
die Förderpumpe derart relativ zur Rotorwelle (12) angeordnet ist, dass die Drehachse (134) senkrecht zur Rotationsachse (14) verläuft.

2. Pumpe nach Anspruch 1,
**dadurch gekennzeichnet, dass**
der Förderer ein Förderrotor (136) ist.

3. Pumpe nach Anspruch 1 oder 2,
**dadurch gekennzeichnet, dass**
die Förderpumpe (110) seitlich neben der Rotorwelle (12) angeordnet ist.

4. Pumpe nach einem der vorhergehenden Ansprüche,
**dadurch gekennzeichnet, dass**
das Betriebsmittel bei einer Raumlage der Pumpe von 0 Grad bis 90 Grad über den ersten Rücklauf (114) und bei einer Raumlage der Pumpe von 90 Grad bis 180 Grad über den zweiten Rücklauf (116) vom Drehlager (84) zur Förderpumpe (110) zurückführbar ist.

5. Pumpe nach einem der vorhergehenden Ansprüche,
**dadurch gekennzeichnet, dass**
bezogen auf die Raumlage der Pumpe von 0 Grad der erste Rücklauf (114) einen ersten Rücklaufkanal (120) aufweist, der vom Drehlager (84) weg nach radial außen und nach unten zu einem ersten Reservoir (122) geführt ist, und der zweite Rücklauf (116) einen zweiten Rücklaufkanal (146) aufweist, der vom Drehlager (84) weg nach radial außen und nach oben zu einem zweiten Reservoir (150) geführt ist.

6. Pumpe nach einem der vorhergehenden Ansprüche,
**dadurch gekennzeichnet, dass**
die Förderpumpe (110) wenigstens einen Arbeitsraum (128, 152) mit wenigstens einem ersten Einlass (126) und einem zweiten Einlass (154) aufweist und über den ersten Einlass (126) mit dem ersten Rücklauf (114), insbesondere mit einem ersten Reservoir (122) des ersten Rücklaufs (114), und über den zweiten Einlass (154) mit dem zweiten Rücklauf (116), insbesondere einem zweiten Reservoir (150) des zweiten Rücklaufs (116), verbunden ist.

7. Pumpe nach Anspruch 6,
**dadurch gekennzeichnet, dass**
die beiden Einlässe (126, 154) in Drehrichtung (140) des Förderers, insbesondere des Förderrotors (136), der Förderpumpe (110) gesehen um zumindest annähernd 180 Grad versetzt zueinander angeordnet sind.

8. Pumpe nach Anspruch 6 oder 7,
**dadurch gekennzeichnet, dass**
bei einer Raumlage der Pumpe von 0 Grad der erste Einlass (126) in einem unteren Bereich der Förderpumpe (110) und der zweite Einlass (154) in einem oberen Bereich der Förderpumpe (110) liegt.

9. Pumpe nach einem der vorhergehenden Ansprüche,
**dadurch gekennzeichnet, dass**
die Förderpumpe (110) dazu ausgebildet ist, über den ersten Rücklauf (114) zurückgeführtes Betriebsmittel oder über den zweiten Rücklauf (116) zurückgeführtes Betriebsmittel in wenigstens einen Vorlauf (112, 144, 158) für das Betriebsmittel zu fördern.

10. Pumpe nach einem der vorhergehenden Ansprüche,
**dadurch gekennzeichnet, dass**
die Förderpumpe (110) dazu ausgebildet ist, bei einer Raumlage der Pumpe von 0 bis 90 Grad über den ersten Rücklauf (114) zurückgeführtes Betriebsmittel in einen ersten Vorlauf (144) und bei einer Raumlage der Pumpe von 90 Grad bis 180 Grad über den zweiten Rücklauf (116) zurückgeführtes Betriebsmittel in einen zweiten Vorlauf (158) zu fördern.

11. Pumpe nach Anspruch 9 oder 10,
**dadurch gekennzeichnet, dass**
die Förderpumpe (110) wenigstens einen Arbeitsraum (128, 152) mit wenigstens einem Auslass (142, 156) aufweist, über den die Förderpumpe (110) mit dem wenigstens einen Vorlauf (112, 144, 158) verbunden ist, wobei, bevorzugt, der Auslass (142, 156) in Drehrichtung des Förderers, insbesondere des Förderrotors (136), der Förderpumpe (110) gesehen um zumindest annähernd 90 Grad gegenüber einem der Einlässe (126, 154) versetzt ist.

12. Pumpe nach einem der Ansprüche 10 oder 11,
**dadurch gekennzeichnet , dass**
die Förderpumpe (110) über einen ersten Auslass (142) mit dem ersten Vorlauf (144) und über einen zweiten Auslass (156) mit dem zweiten Vorlauf (158) verbunden ist, und, bevorzugt, die beiden Auslässe (156, 158) in Drehrichtung des Förderers, insbesondere des Förderrotors (138), der Förderpumpe (110) gesehen um jeweils 90 Grad versetzt zu den jeweiligen Einlässen (126, 154) für die beiden Rückläufe (114, 116) an der Förderpumpe (110) vorgesehen sind.

13. Pumpe nach einem der Ansprüche 10 bis 12,
**dadurch gekennzeichnet, dass**
die beiden Vorläufe (144, 158) in einen gemeinsamen Vorlauf (112) münden, wobei, bevorzugt, wenigstens eine Rücklaufverhinderungseinrichtung (160), insbesondere ein Rückschlagelement oder ein Absperrelement, wie etwa ein Ventil, im Mündungsbereich der beiden Vorläufe (144, 158) vorgesehen ist, wobei die Rücklaufverhinderungseinrichtung (160) verhindert, dass über den ersten Vorlauf (144) zugeführtes Betriebsmittel in den zweiten Vorlauf (158) gelangt und, umgekehrt, dass über den zweiten Vorlauf (158) zugeführtes Betriebsmittel in den ersten Vorlauf (144) gelangt.

14. Pumpe nach einem der vorhergehenden Ansprüche,
**dadurch gekennzeichnet, dass**
wenigstens ein Rücklauf (114, 116) zur Förderpumpe (110) hin verschließbar ist, insbesondere mittels wenigstens eines manuell betätigbaren oder schwerkraft-, druck- oder elektrisch betätigbaren Absperrelements.

15. Pumpe nach einem der vorhergehenden Ansprüche,
**dadurch gekennzeichnet, dass**
die Förderpumpe (110) eine Drehschieberpumpe, eine Scrollpumpe, eine Siegbahnpumpe oder eine Membranpumpe, insbesondere eine Doppelmembranpumpe, ist.

## Claims

1. A vacuum pump, called a "pump" in the following, comprising
a rotor shaft (12) rotatable about a rotational axis (14);
a conveying pump (110) for conveying an operating medium, in particular a lubricant, to supply the operating medium to a rotary bearing (84) which serves for the rotatable support of the rotor shaft (12); and
at least one first return means (114) and one second return means (116) for the operating medium,
wherein the pump is connectable to a recipient in every spatial position in which the rotational axis (14) includes an angle to the vertical in the range from and including 0 degrees up to and including 180 degrees; and
wherein the conveying pump (110) and the two return means (114, 116) are arranged at the pump such that the operating medium can be returned from the rotary bearing (84) to the conveying pump (110) via at least one of the two return means (114, 116) in every spatial position; and
wherein the conveying pump (110) has at least one conveyor rotatable about an axis of rotation (134),
**characterized in that**
the conveying pump is arranged relative to the rotor shaft (12) such that the axis of rotation (134) extends perpendicular to the rotational axis (14).

2. A pump in accordance with claim 1,
**characterized in that**
the conveyor is a conveying rotor (136).

3. A pump in accordance with claim 1 or claim 2,
**characterized in that**
the conveying pump (110) is arranged laterally next to the rotor shaft (12).

4. A pump in accordance with any one of the preceding claims,
**characterized in that**
the operating medium can be returned from the rotary bearing (84) to the conveying pump (110) via the first return means (114) at a spatial position of the pump from 0 degrees to 90 degrees and via the second return means (116) at a spatial position of the pump from 90 degrees to 180 degrees.

5. A pump in accordance with any one of the preceding claims,
**characterized in that**,
with respect to the spatial position of the pump of 0 degrees, the first return means (114) has a first return passage (120) which is led radially outwardly and downwardly away from the rotary bearing (84) to a first reservoir (122) and the second return means (116) has a second return passage (146) which is led radially outwardly and upwardly away from the rotary bearing (84) to a second reservoir (150).

6. A pump in accordance with any one of the preceding claims,
**characterized in that**
the conveying pump (110) has at least one work space (128, 152) having at least one first inlet (126) and one second inlet (154) and is connected via the first inlet (126) to the first return means (114), in particular to a first reservoir (122) of the first return means (114), and is connected via the second inlet (154) to the second return means (116), in particular to a second reservoir (150) of the second return means (116).

7. A pump in accordance with claim 6,
**characterized in that**
the two inlets (126, 154) are arranged offset from one another by at least approximately 180 degrees viewed in the direction of rotation (140) of the conveyor, in particular of the conveying rotor (136), of the conveying pump (110).

8. A pump in accordance with claim 6 or claim 7,
**characterized in that**
the first inlet (125) lies in a lower region of the conveying pump (110) and the second inlet (154) lies in an upper region of the conveying pump (110) at a spatial position of the pump of 0 degrees.

9. A pump in accordance with any one of the preceding claims,
**characterized in that**
the conveying pump (110) is configured to convey operating medium which is returned via the first return means (114) or operating medium which is returned via the second return means (116) into at least one feed (112, 144, 158) for the operating medium.

10. A pump in accordance with any one of the preceding claims,
**characterized in that**
the conveying pump (110) is configured, at a spatial position of the pump from 0 to 90 degrees, to convey operating medium which is returned via the first return means (114) into a first feed (144) and, at a spatial position of the pump from 90 to 180 degrees, to convey operating medium which is returned via the second return means (116) into a second feed (158).

11. A pump in accordance with claim 9 or claim 10,
**characterized in that**
the conveying pump (110) has at least one work space (128, 152) having at least one outlet (142, 156) via which the conveying pump (110) is connected to the at least one feed (112, 144, 158), with, preferably, the outlet (142, 156) being offset by at least approximately 90 degrees with respect to one of the inlets (126, 154) viewed in the direction of rotation of the conveyor, in particular of the conveying rotor (136), of the conveying pump (110).

12. A pump in accordance with one of the claims 10 or 11,
**characterized in that**
the conveying pump (110) is connected to the first feed (144) via a first outlet (142) and to the second feed (158) via a second outlet (156) and, preferably, the two outlets (156, 158) are provided at the conveying pump (110) respectively offset by 90 degrees from the respective inlets (126, 154) for the two return means (114, 116) viewed in the direction of rotation of the conveyor, in particular of the conveying rotor (136), of the conveying pump (110).

13. A pump in accordance with any one of the claims 10 to 12,
**characterized in that**
the two feeds (144, 158) open into a common feed (112), with, preferably, at least one return prevention device (160), in particular a non-return element or a blocking element, such as a valve, being provided in the opening region of the two feeds (144, 158), and with the return prevention device (160) preventing operating medium which is supplied via the first feed (144) from entering the second feed (158) and, conversely, preventing operating medium which is supplied via the second feed (158) from entering the first feed (144).

14. A pump in accordance with any one of the preceding claims,
**characterized in that**
at least one return means (114, 116) is closable toward the conveying pump (110), in particular by means of at least one blocking element which can be actuated manually or can be actuated by gravity, by pressure or electrically.

15. A pump in accordance with any one of the preceding claims,
**characterized in that**
the conveying pump (110) is a rotary vane pump, a scroll pump, a Siegbahn pump or a diaphragm pump, in particular a double diaphragm pump.

## Revendications

1. Pompe à vide, désignée ci-après par "pompe", comportant un arbre de rotor (12) rotatif autour d'un axe de rotation (14), une pompe de convoyage (110) pour convoyer un fluide de service, en particulier un lubrifiant, pour alimenter en fluide de service un palier de rotation (84) qui sert à soutenir en rotation l'arbre de rotor (12), et
au moins un premier retour (114) et un second retour (116) pour le fluide de service,
dans laquelle
la pompe est susceptible d'être raccordée à un récipient dans chaque position spatiale dans laquelle l'axe de rotation (14) définit un angle par rapport à la verticale dans la plage de 0 degré à 180 degrés inclus, et
la pompe de convoyage (110) et les deux retours (114, 116) sont agencés sur la pompe de telle sorte que dans chaque position spatiale le fluide de service peut retourner depuis le palier de rotation (84) vers la pompe de convoyage par l'un des deux retours (114, 116), et
la pompe de convoyage (110) comprend au moins un convoyeur rotatif autour d'un axe de révolution (134),
**caractérisée en ce que**
la pompe de convoyage est agencée de telle sorte par rapport à l'arbre de rotor (12) que l'axe de révolution (134) s'étend perpendiculairement à l'axe de rotation (14).

2. Pompe selon la revendication 1,
**caractérisée en ce que**
le convoyeur est un rotor convoyeur (136).

3. Pompe selon la revendication 1 ou 2,
**caractérisée en ce que**
la pompe de convoyage (110) est agencée latéralement à côté de l'arbre de rotor (12).

4. Pompe selon l'une des revendications précédentes,
**caractérisée en ce que**
le fluide de service est susceptible de retourner depuis le palier de rotation (84) jusqu'à la pompe de convoyage (110) par le premier retour (114), lors d'une position spatiale de la pompe de 0 degré à 90 degrés, et de retourner par le second retour (116), lors d'une position spatiale de la pompe de 90 degrés à 180 degrés.

5. Pompe selon l'une des revendications précédentes,
**caractérisée en ce que**
par rapport à la position spatiale de la pompe de 0 degré, le premier retour (114) comprend un premier canal de retour (120) qui est mené en éloignement du palier de rotation (84) radialement vers l'extérieur et vers le bas jusqu'à un premier réservoir (122), et le second retour (116) comprend un second canal de retour (146) qui est mené en éloignement du palier de rotation (84) radialement vers l'extérieur et vers le haut jusqu'à un second réservoir (150).

6. Pompe selon l'une des revendications précédentes,
**caractérisée en ce que**
la pompe de convoyage (110) comprend au moins une chambre de travail (128, 152) pourvue d'au moins une première entrée (126) et d'une seconde entrée (154), et est reliée au premier retour (114) par la première entrée (126), en particulier à un premier réservoir (122) du premier retour (114), et est reliée au second retour (116) par la seconde entrée (154), en particulier à un second réservoir (150) du second retour (116).

7. Pompe selon la revendication 6,
**caractérisée en ce que**
les deux entrées (126, 154), vues en direction de rotation (140) du convoyeur, en particulier du rotor convoyeur (136), de la pompe de convoyage (110), sont agencées en décalage l'une de l'autre d'au moins approximativement 180 degrés.

8. Pompe selon la revendication 6 ou 7,
**caractérisée en ce que**
lors d'une position spatiale de la pompe de 0 degré, la première entrée (126) se situe dans une zone inférieure de la pompe de convoyage (110) et la seconde entrée (154) se situe dans une zone supérieure de la pompe de convoyage (110).

9. Pompe selon l'une des revendications précédentes,
**caractérisée en ce que**
la pompe de convoyage (110) est réalisée pour convoyer le fluide de service retourné par le premier retour (114) ou le fluide de service retourné par le second retour (116) jusque dans au moins un aller (112, 144, 158) pour le fluide de service.

10. Pompe selon l'une des revendications précédentes,
**caractérisée en ce que**
la pompe de convoyage (110) est réalisée pour convoyer le fluide de service retourné par le premier retour (114) jusque dans un premier aller (144), lors d'une position spatiale de la pompe de 0 à 90 degrés, et de convoyer le fluide de service retourné par le second retour (116) jusque dans au moins un second aller (158), lors d'une position spatiale de la pompe de 90 degrés à 180 degrés.

11. Pompe selon la revendication 9 ou 10,
**caractérisée en ce que**
la pompe de convoyage (110) comprend au moins une chambre de travail (128, 152) pourvue d'au moins une sortie (142, 156) par laquelle la pompe de convoyage (110) est reliée audit au moins un aller (112, 144, 158), et, de préférence, la sortie (142, 156) est décalée par rapport à l'une des entrées (126, 154) d'au moins approximativement 90 degrés, vue en direction de rotation du convoyeur, en particulier du rotor convoyeur (136), de la pompe de convoyage (110).

12. Pompe selon l'une des revendications 10 ou 11,
**caractérisée en ce que**
la pompe de convoyage (110) est reliée au premier aller (144) par une première sortie (142) et au second aller (158) par une seconde sortie (156), et, de préférence, les deux sorties (156, 158) sont prévues en décalage par rapport aux entrées respectives (126, 154) pour les deux retours (114, 116) sur la pompe de convoyage (110), vues en direction de rotation du convoyeur, en particulier du rotor convoyeur (136), de la pompe de convoyage (110).

13. Pompe selon l'une des revendications 10 à 12,
**caractérisée en ce que**
les deux allers (144, 158) débouchent dans un aller commun (112), et, de préférence, il est prévu au moins un moyen inhibant le retour (160), en particulier un élément anti-retour ou un élément d'arrêt, tel qu'une vanne, dans la zone d'embouchure des deux allers (144, 158), le moyen inhibant le retour (160) empêchant le fluide de service alimenté par le premier aller (144) de parvenir dans le second aller (158) et inversement empêchant le fluide de service alimenté par le second aller (158) de parvenir dans le premier aller (144).

14. Pompe selon l'une des revendications précédentes,
**caractérisée en ce que**
au moins un retour (114, 116) est refermable en direction de la pompe de convoyage (110), en particulier à l'aide d'au moins un élément d'arrêt à actionnement manuel ou à actionnement par gravité, par pression ou par voie électrique.

15. Pompe selon l'une des revendications précédentes,
**caractérisée en ce que**
la pompe de convoyage (110) est une pompe rotative à palettes, une pompe à spirales, une pompe de type Siegbahn ou une pompe à membrane, en particulier une pompe à membrane double.
